# EUROPEAN PATENT SPECIFICATION

(11) **EP 3 784 526 B1**
(45) Date of publication and mention of the grant of the patent: **13.04.2022**
(21) Application number: 18728999.6
(22) Date of filing: 24.04.2018
(51) Int. Cl.: B60Q 1/14, G05G 5/05, H01H 21/24, H01H 21/50, G05G 1/08

(54) **SELF-RETURNING ROTARY SWITCH ASSEMBLY, IN PARTICULAR OF A STEERING WHEEL COLUMN INTEGRATED MODULE OF AN AUTOMOTIVE VEHICLE**
SELBSTRÜCKSTELLENDE DREHSCHALTERANORDNUNG, INSBESONDERE EINES INTEGRIERTEN LENKSÄULENMODULS EINES KRAFTFAHRZEUGS
ENSEMBLE COMMUTATEUR ROTATIF À RETOUR AUTOMATIQUE, EN PARTICULIER D'UN MODULE INTÉGRÉ DE COLONNE DE DIRECTION D'UN VÉHICULE AUTOMOBILE

(43) Date of publication of application: 03.03.2021
(73) Proprietor: Merit Poland Spólka Z Ograniczona Odpowiedzialnoscia, 30-394 Kraków (PL)
(72) Inventor: KWIECIEN, Leszek, 32-031 Chorowice (PL); SYREK, Wojciech, 34-113 Sosnowice (PL)
(74) Representative: Lukaszyk, Szymon
(86) International application number: PCT/PL2018/000041
(87) International publication number: WO 2019/209126

(56) References cited:
- EP-A2- 2 628 637
- DE-A1- 2 403 174
- FR-A1- 2 973 933
- JP-A- S61 190 821
- JP-A- 2007 273 337
- US-A- 5 701 660
- US-A1- 2005 156 916

## Description

The present invention relates to a self-returning rotary switch assembly, in particular of a steering wheel column integrated module of an automotive vehicle, comprising a support, an activating element disposed rotationally within the support and mechanically coupled with an electric signal device, and a self-returning haptic assembly coupled with said activating element to maintain the neutral position thereof.

### Background of the Invention

Self-returning rotary switches of this kind are frequently employed in steering wheel column integrated modules (CIM) in an automotive industry for controlling various components and subsystems of a vehicle including lights, windscreen wipers and washer, cruise control, audio system, etc. They usually form compact, preassembled units that at the vehicle assembly line are mechanically fixed to the steering wheel column and electrically connected to the vehicle wiring. Commonly the control functionality is implemented using force-sensing resistive foils, conductive contact switches or electric signal devices of a capacitive nature. It is known to implement the self-returning functionality by means of spring plungers acting on a curved cams.

It is frequently desirable to provide user turning the activating element with a haptic response, so he or she would know if a desired predefined effect of the component controlled by the switch has indeed been effected, with desired efficiency and without any other response of the system, such as control light being activated, etc.

Patent application DE2403174 discloses a self-returning rotary switch with a latching mechanism having a spherical locking member on a switch axis coacting with latching collar in housing. A stopping strip cooperates with angular stops secured to the switch housing. The switch axis carries a resetting spring wound in axial direction next to the spherical locking member which maintains switching position only as long as a rotational force is exerted on the switch axis. The switch housing is divided into two parts, having in the first part a deep set latching rim, and in the second part circumferentially distributed grooves, corresponding to the switching positions. These grooves are engageable by the sprung stop, onto which abuts one end of the wound spring supported by the housing.

A similar multistage rotary electric switch is disclosed in the publication GB2108321. Publications DE2403565, US3519777 and CN105788932 on the other hand disclose switches, where the resetting or self-returning is provided by at least one spring extended along and acting on an axis perpendicular to the axis of the switch rotation.

Patent publication FR 2 973933 A1 discloses a switch device comprising a first operating button and a second operating button, which are arranged to be on either side of a fixed section, and respectively comprise a first and a second switch position, in which, by placing the first operating button and the second operating button in respective selected switch positions, the corresponding switch contact points are changed. The device comprises a return unit configured to return the second operation button to the first switch position that includes a cam section having a curved cam surface and a movable member compressing this curved cam surface to rotate the second operating button.

Patent publication US 5 701 660 A discloses a method for assembling a multifunctional switch stalk including the steps of providing a handle having an inner end and an outer end, the handle including a base portion at the inner end for being mounted on a vehicle steering column, mounting a shaft having an axis and an outer end on the outer end of the handle. mounting a control ring on the shaft, the control ring being rotatable to selectively actuate a first predetermined vehicle function, mounting a control knob on the shaft. said control knob being rotatable to selectively actuate a second predetermined vehicle function, and mounting a push button on an outer end of the control knob, the push button being axially compressible to selectively actuate a third predetermined vehicle function.

Related solutions are disclosed in publications EP 2 628 637 A2, US 2005/156916 A1, DE 24 03 174 A1, JP 2007273337 A, and JP S61 190821 A.

Therefore it has been the object of the present invention to provide a self-returning rotary switch, which would provide several intermediate angular positions, would be compact, cost efficient and simple to manufacture and assembly.

### Summary of the Invention

The invention provides a self-returning rotary switch assembly as defined in claim 1.

The term "spring plunger" as used in the context of the present invention denotes any element or assembly capable of exerting an axial force along the line of its disposition in order to extend its length.

Preferably said support of the an activating element has a form of a lever and a head, preferably snap-locked with each other, and said activating element is rotationally disposed over the shaft of the lever or of the head.

Preferably said multi-position haptic assembly comprises two spring plungers disposed substantially collinearly along the line normal to the axis of rotation of said activating element and pressing on two engaging surfaces.

The invention provides a self-returning rotary switch assembly having a compact construction, where both the haptic multi-position and the self-returning functionality of the switch are realised in the relatively small internal space of the activating element. Shaping of the engaging surfaces of the assemblies provide versatile switch tuning opportunities. Possible to achieve relatively long stroke of the plungers ensure sufficient self-returning and haptic forces.

### Brief description of drawings

The invention shall be described and explained below in connection with the attached drawings in which:
Fig. 1 is a schematic perspective, exploded view of an embodiment of a self-returning rotary switch assembly according to the present invention;
Fig. 2 is a schematic perspective, cross-sectional view of the activating element illustrating the self-returning haptic assembly and its spring plungers; and
Fig. 3 is a schematic external view of the activating element illustrating the multi-position haptic assembly and its spring plungers.

### Detailed description of preferred embodiment

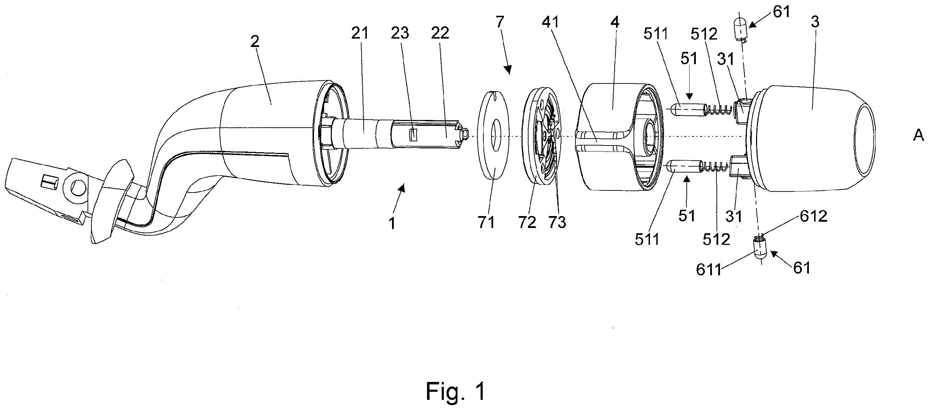

As shown in Fig. 1 the embodiment of a self-returning rotary switch assembly 1 comprises a support in a form of a lever 2 and a head 3, and an activating element 4 disposed rotationally within the support 2, 3 and mechanically coupled with an electric signal device 7. The switch assembly 1 forms a compact, preassembled steering wheel column integrated module of an automotive vehicle (not shown). The assembly 1 shall be at the vehicle assembly line mechanically fixed to the steering wheel column and the electric signal device 7 shall be electrically connected to the vehicle wiring not shown in the drawing in a manner well known to those skilled in the art. Turning of the activating element 4 provided with a radial projection 41 around an axis A may be employed for controlling various components and subsystems of a vehicle such as windscreen wipers frequency, cruise control speed, audio system etc. On the other hand the inclinations of the lever 2 of the assembly 1 may be employed for turning the wipers or cruise control on and off, etc.

The lever 2 is provided with a cylindrical shaft 21 terminated with a non-cylindrical section 22 provided with a snap-lock recessions 23. The head 3 on the other hand is provided with an opening (not shown) having a cross-section corresponding to the cross-section of the non-cylindrical section 22 of the lever 2 and a snap-lock projections (not shown) corresponding to the recessions 23. At the final step of assembling the switch assembly, the head 3 is inserted and snaps over the non-cylindrical section 22 of the lever 2 providing simple and robust fixing.

The activating element 4 has a form of a single uniform component provided, at the side of the lever 2, with activating projections (not shown) cooperating with a number of sliding switches 73 of the electric signal device 7. The sliding switches 73 are disposed over the switch plate 72 adjoining a printed circuit board 71. Rotation of the activating element 4 leads to connection of a given switch 73 with the appropriate conductive trace of the board 71 encoding a predefined input transmitted to a given vehicle component controlled by the switch. Radial projection 41, as well as graphical embossed symbols marked on the surfaces of the activating element 4 and the head provide Identification of an angular position of the activating element 4.

An internal hollow space of the activating element 4 encompasses a self-returning haptic assembly 5 and a multi-position haptic assembly 6.

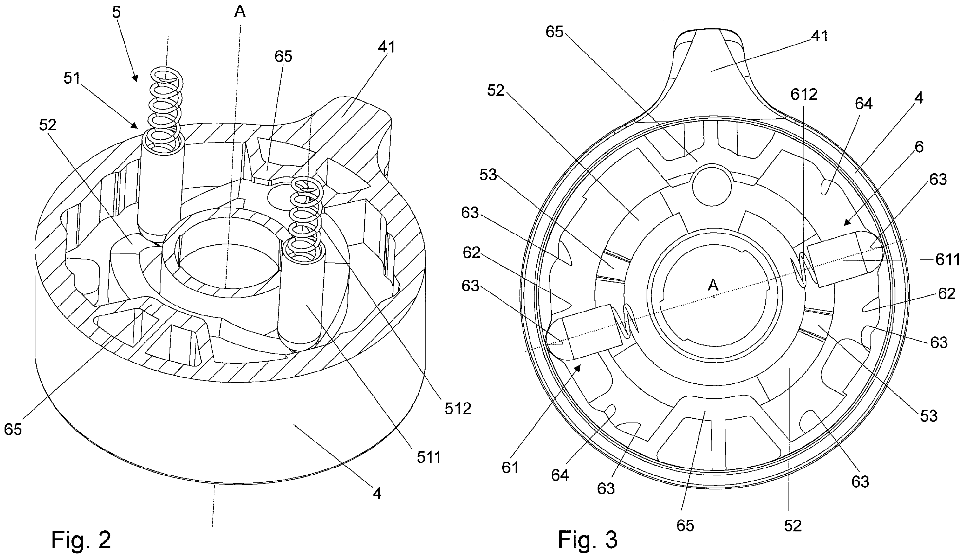

As shown in Fig. 2 (and Fig. 3), the self-returning haptic assembly 5 comprises two surfaces 52, each cooperating with a spring plunger 51. Each spring plunger 51 comprises an engaging cap 511 with a spherical tip encompassing a spring 512, and is disposed parallelly to the axis A of rotation of the activating element 4. As shown, in this embodiment, both spring plungers 51 are disposed coplanarly with the axis (A) of rotation of the activating element 4.

Each of the engaging surfaces 52 comprises two helical sections joined by an axial recession 53 (cf. Fig. 3) forming an equilibrium point, in order to maintain the neutral position of the activating element 4. With such a shaping of the surfaces 52, the activating element 4 will tend to return to its neutral position in which the engaging caps 511 of the spring plungers 51 remain in axial recessions 53, ensuring locally minimum elastic energy of the springs 512. In this embodiment the surfaces 52 are shaped symmetrically so that this self-returning action will take place regardless of the direction of rotation of the activating element 4 with respect to the equilibrium point 53.

As shown in Fig. 3 (and Fig. 2) the multi-position haptic assembly 6 comprises two surfaces 62, each engaged with a spring plunger 61. Each spring plunger comprises an engaging cap 611 with a spherical tip encompassing a spring 612 and is disposed perpendicularly to the axis A of rotation of the activating element 4. As shown, in this embodiment, both spring plungers 61 are disposed substantially collinearly along the line normal to the axis (A) of rotation of the activating element 4.

Each engaging surface 62 is provided with a number of radial recessions 63 and a number of radial projections 64 corresponding to particular stages or intermediate positions of the multi-position assembly 6 and providing a predefined multi-position haptic response to the user turning the activating element 4. As shown, in this embodiment full revolution of the activating element 4 is not possible due to two stopping projections 65 blocking further angular relative movement of the plungers 61.

As shown in Fig. 1 the engaging caps 511 and 611 of the plungers 51 and 52 are guided axially within the guiding projections 31 of the head 3, while the other ends of the springs 512 and 612 abuts the bottoms of the projections 31.

The haptic assemblies 5 and 6 may obviously have different constructions than the one shown and described with reference to the presented embodiment. They may comprise different number of spring plungers.

The above embodiments of the present invention are therefore merely exemplary.

The figures are not necessarily to scale and some features may be exaggerated or minimized. These factors however should not be considered as limiting the invention the scope of protection of which being defined by the appended claims.

List of reference numerals
- 1.: self-returning rotary switch assembly
- 2.: lever

- 21.: cylindrical shaft
- 22.: non-cylindrical section
- 23.: snap-lock recessions

- 3.: head

- 31.: guiding projection

- 4.: activating element

- 41.: radial projection

- 5.: self-returning haptic assembly

- 51.: spring plunger
- 511.: engaging cap
- 512.: spring
- 52.: engaging surface
- 53.: axial recession (equilibrium point)

- 6.: multi-position haptic assembly

- 61.: spring plunger

- 611.: engaging cap
- 612.: spring

- 62.: engaging surface
- 63.: radial recession
- 64.: radial projection
- 65.: stopping projection

- 7.: electric signal device

- 71.: printed circuit board
- 72.: switch plate
- 73.: sliding switch

## Claims

1. A self-returning rotary switch assembly (1), in particular a self-returning rotary switch assembly of a steering wheel column integrated module of an automotive vehicle, comprising a support (2, 3), an activating element (4) disposed rotationally within the support and mechanically coupled with an electric signal device, a self-returning haptic assembly (5) with said activating element (4) to maintain a neutral position thereof, and a multi-position haptic assembly (6) coupled with said activating element (4) to provide several intermediate angular positions,
**characterised in that**
said self-returning haptic assembly (5) comprises two spring plungers (51) disposed substantially parallelly and coplanarly to the axis (A) of rotation of said activating element (4) and pressing onto two respective curved engaging surfaces (52), each comprising two locally helical sections joined by an axial recession (53) forming an equilibrium point in order to maintain the neutral position of said activating element (4) and shaped symmetrically so that the self-returning action takes place regardless of the direction of rotation of the activating element (4) with respect to said equilibrium point (53), **in that** said multi-position haptic assembly (6) comprises at least one spring plunger (61) disposed substantially perpendicularly to the axis (A) of rotation of said activating element (4) and pressing onto a curved, engaging surface (62) provided with a number of radial recessions (63) and a number of radial projections (64) corresponding to the intermediate angular positions and providing haptic multi-position functionality of the assembly (6), wherein said engaging surfaces (52) of said self-returning haptic assembly (5) and said engaging surface (62) of said multi-position haptic assembly (6) are formed within the internal space of the activating element (4) having a form of a single uniform component, and **in that**
each of said spring plungers (51, 61) comprises an engaging cap (511, 611) encompassing a spring (512, 612).

2. The switch assembly according to Claim 1, **characterized in that**, said support has a form of a lever (2) and a head (3), preferably snap-locked with each other, and said activating element (4) is rotationally disposed over the shaft (21) of the lever (2) or of the head (3).

3. The switch assembly according to Claim 1 or 2, **characterized in that**, said multi-position haptic assembly (6) comprises two spring plungers (61) disposed substantially collinearly along the line normal to the axis (A) of rotation of said activating element (4) and pressing on two engaging surfaces (62).

## Patentansprüche

1. Eine selbsttätig zurückkehrende Drehschalterbaugruppe (1), insbesondere eine selbsttätig zurückkehrende Drehschalterbaugruppe eines integrierten Lenksäulenmoduls eines Kraftfahrzeugs, mit einer Stütze (2, 3), einem Betätigungselement (4), das drehbar innerhalb der Stütze angeordnet und mechanisch mit einer elektrischen Signalvorrichtung gekoppelt ist, einer selbsttätig zurückkehrenden haptischen Baugruppe (5) mit dem Betätigungselement (4), um eine neutrale Position desselben aufrechtzuerhalten, und einer haptischen Mehrfachpositionsbaugruppe (6), die mit dem Betätigungselement (4) gekoppelt ist, um mehrere Zwischenwinkelpositionen bereitzustellen,
**dadurch gekennzeichnet, dass**
die selbsttätig zurückkehrende haptische Baugruppe (5) zwei Federkolben (51) umfasst, die im Wesentlichen parallel und komplanar zur Drehachse (A) des Betätigungselements (4) angeordnet sind und auf zwei entsprechende gekrümmte Eingriffsflächen (52) drücken, die jeweils zwei örtlich schraubenförmige Abschnitte umfasst, die durch eine axiale Aussparung (53) verbunden sind, die einen Gleichgewichtspunkt bildet, um die neutrale Position des Betätigungselements (4) aufrechtzuerhalten, und symmetrisch geformt ist, so dass die Wirkung des selbsttätigen Zurückkehrens unabhängig von der Drehrichtung des Betätigungselements (4) in Bezug auf den Gleichgewichtspunkt (53) stattfindet, indem die haptische Mehrfachpositionsbaugruppe (6) mindestens einen Federkolben (61) aufweist, der im Wesentlichen senkrecht zur Drehachse (A) des Betätigungselements (4) angeordnet ist und auf eine gekrümmte Eingriffsfläche (62) drückt, die mit einer Anzahl von radialen Vertiefungen (63) und einer Anzahl von radialen Vorsprüngen (64) versehen ist, die den Zwischenwinkelpositionen entsprechen und die haptische Funktionalität der Mehrfachpositionsbaugruppe (6) gewährleisten, wobei die Eingriffsflächen (52) der selbsttätig zurückkehrenden haptischen Baugruppe (5) und die Eingriffsfläche (62) der haptischen Mehrfachpositionsbaugruppe (6) innerhalb des Innenraums des Betätigungselements (4) in Form eines einzigen einheitlichen Bauteils ausgebildet sind, und wobei
jeder der Federkolben (51, 61) eine Eingriffskappe (511, 611) aufweist, die eine Feder (512, 612) umschließt.

2. Die Schalterbaugruppe nach Anspruch 1, **dadurch gekennzeichnet, dass** die Stütze die Form eines Hebels (2) und eines Kopfes (3) hat, die vorzugsweise miteinander schnappverriegelt sind, und dass das Betätigungselement (4) drehbar über der Welle (21) des Hebels (2) oder des Kopfes (3) angeordnet ist.

3. Die Schalterbaugruppe nach Anspruch 1 oder 2, **dadurch gekennzeichnet, dass** die haptische Mehrfachpositionsbaugruppe (6) zwei Federkolben (61) umfasst, die im Wesentlichen kollinear entlang der Linie senkrecht zur Drehachse (A) des Betätigungselements (4) angeordnet sind und auf zwei Eingriffsflächen (62) drücken.

## Revendications

1. Un ensemble de commutateur rotatif à retour automatique (1), en particulier un ensemble de commutateur rotatif à retour automatique d'un module intégré de colonne de direction d'un véhicule automobile, comprenant un support (2, 3), un élément d'activation (4) disposé de manière rotative à l'intérieur du support et couplé mécaniquement à un dispositif de signal électrique, un ensemble haptique à retour automatique (5) avec ledit élément d'activation (4) pour maintenir une position neutre de celui-ci, et un ensemble haptique à positions multiples (6) couplé audit élément d'activation (4) pour fournir plusieurs positions angulaires intermédiaires,
**caractérisé en ce que**
ledit ensemble haptique à retour automatique (5) comprend deux pistons à ressort (51) disposés sensiblement parallèlement et de manière coplanaire à l'axe (A) de rotation dudit élément d'activation (4) et appuyant sur deux surfaces d'engagement (52) courbes respectives, chacune comprenant deux sections localement hélicoïdales jointes par une récession axiale (53) formant un point d'équilibre afin de maintenir la position neutre dudit élément d'activation (4) et formée symétriquement de sorte que l'action de retour automatique ait lieu indépendamment de la direction de rotation de l'élément d'activation (4) par rapport audit point d'équilibre (53), **en ce que** ledit ensemble haptique à positions multiples (6) comprend au moins un piston à ressort (61) disposé sensiblement perpendiculairement à l'axe (A) de rotation dudit élément d'activation (4) et appuyant sur une surface d'engagement (62) incurvée pourvue d'un certain nombre d'évidements radiaux (63) et d'un certain nombre de saillies radiales (64) correspondant aux positions angulaires intermédiaires et fournissant une fonctionnalité haptique à positions multiples de l'ensemble (6), dans lequel lesdites surfaces d'engagement (52) dudit ensemble haptique à retour automatique (5) et ladite surface d'engagement (62) dudit ensemble haptique à positions multiples (6) sont formées à l'intérieur de l'espace interne de l'élément d'activation (4) ayant la forme d'un composant uniforme unique, et **en ce que**
chacun desdits pistons à ressort (51, 61) comprend un capuchon d'engagement (511, 611) englobant un ressort (512, 612).

2. L'ensemble de commutateur selon la revendication 1, **caractérisé en ce que** ledit support a la forme d'un levier (2) et d'une tête (3), de préférence verrouillés l'un à l'autre par encliquetage, et que ledit élément d'activation (4) est disposé de manière rotative sur l'arbre (21) du levier (2) ou de la tête (3).

3. L'ensemble de commutateur selon la revendication 1 ou 2, **caractérisé en ce que** ledit ensemble haptique à positions multiples (6) comprend deux pistons à ressort (61) disposés de manière sensiblement colinéaire le long de la ligne normale à l'axe (A) de rotation dudit élément d'activation (4) et appuyant sur deux surfaces d'engagement (62).
